(19) Europäisches Patentamt European Patent Office Office européen des brevets

(11) **EP 4 492 057 A1**

(12) **EUROPEAN PATENT APPLICATION**

(43) Date of publication:
**15.01.2025 Bulletin 2025/03**

(21) Application number: **24188326.3**

(22) Date of filing: **12.07.2024**

(51) International Patent Classification (IPC):
**G01N 33/487** (2006.01)   **G01N 15/1031** (2024.01)
**G01N 27/02** (2006.01)   **G01N 15/10** (2024.01)

(52) Cooperative Patent Classification (CPC):
**G01N 15/1031; G01N 27/02;** G01N 15/1012;
G01N 2015/1006

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.07.2023 US 202318221782**

(71) Applicant: **Analog Devices International
Unlimited Company
Limerick (IE)**

(72) Inventors:
• **RIORDAN, Liam**
  **Co. Limerick (IE)**
• **PONOMAREV, Youri Victorovitch**
  **Co. Limerick (IE)**
• **LEAHY, Claire**
  **Co. Limerick (IE)**

(74) Representative: **Yang, Shu
Withers & Rogers LLP
2 London Bridge
London SE1 9RA (GB)**

(54) **PROPERTY DETECTION FOR FLUID IN CARTRIDGE**

(57)    Methods and devices for detecting a property of a fluid inside a cartridge is disclosed herein. An electronic reader can be configured to electrically connect to a cartridge and detect the property of the fluid inline. The electronic reader can measure a voltage of the fluid inside the cartridge to determine an impedance of the fluid at a first time point. The electronic reader can use the determined impedance of the fluid and an impedance of a calibration resistor to get a first impedance ratio at the first time point. The electronic reader can then compare the first impedance ratio with a second impedance ratio determined at a second time point to evaluate whether the fluid inside the cartridge is still effective for its intended purpose.

## Description

CROSS REFERENCE TO RELATED APPLICATIONS

This application claims the benefit of priority of U.S. Patent Application No. 18/221,782, filed July 13, 2023 and titled "PROPERTY DETECTION FOR FLUID IN CARTRIDGE," the disclosure of which is hereby incorporated by reference in its entirety and for all purposes.

TECHNICAL FIELD

The present application relates to devices and methods for detecting a property of a fluid inside a cartridge.

BACKGROUND

Various types of medical devices can include fluids stored inside cavities of the devices. Such fluids may have shelf lives beyond which the fluids are no longer effective for its intended purposes. Also, one or more properties of a fluid inside a cartridge may changes as time passes. It can be difficult and/or inconvenient to access and test a property of a fluid inside cavities of a device. Therefore, there remains a need for devices and methods for detecting a property of fluid stored inside a medical device.

SUMMARY

The disclosure relates generally to devices and methods for detecting a property of a fluid inside a cartridge. One aspect of this disclosure includes a system for detecting a property of a fluid. The system includes a cartridge and an electronic reader. The cartridge includes a fluidic channel, the fluidic channel comprising at least two electrodes disposed along the fluidic channel of the cartridge. The electronic reader is configured to electrically connect to the cartridge, the electronic reader comprising a calibration resistor and impedance processing circuitry. The impedance processing circuitry is configured to determine a first impedance of the fluid in the fluidic channel of the cartridge, determine a second impedance of the calibration resistor in the electronic reader, determine at least a first impedance ratio based at least in part on the first impedance and the second impedance, and determine the property of the fluid based at least in part on the first impedance ratio.

A variation of the aspect above is, wherein the electronic reader is configured to determine the first impedance based at least in part on a first voltage of the fluid measured between the at least two electrodes of the cartridge, and determine the second impedance based at least in part on a second voltage measured between two points on the calibration resistor.

A variation of the aspect above is, wherein the electronic reader is configured to apply an input voltage between the at least two electrodes of the cartridge and measures the first voltage between the two electrodes when the fluid is between the two electrodes in the fluidic channel.

A variation of the aspect above is, wherein the impedance processing circuitry is configured to compare the first impedance ratio with a second impedance ratio to determine the property of the fluid, the first impedance ratio determined at least in part based on measurements taken at a first time point, and the second impedance ratio determined at least in part based on measurements taken at a second time point.

A variation of the aspect above is, wherein the electronic reader further comprises a memory for storing at least the first impedance ratio and the second impedance, and wherein the electronic reader is configured to determine the second impedance ratio based at least in part on the stored second impedance.

A variation of the aspect above is, wherein the impedance processing circuitry is configured to determine that the fluid is expired if a percentage difference between the first impedance ratio and the second impedance ratio is greater than a predetermined percentage.

A variation of the aspect above is, wherein the impedance processing circuitry is configured to output a notification to indicate the determined property of the fluid.

Another aspect of this disclosure includes a method of detecting a property of a fluid inside a cartridge using an electronic reader. The method includes electrically connecting the electronic reader to the cartridge, determining a first impedance of a fluid in a fluidic channel of the cartridge at a first time point, determining a second impedance of a calibration resistor in the electronic reader at the first time point, determining at least a first impedance ratio based at least in part on the first impedance and the second impedance, and determining the property of the fluid at least in part based on the first impedance ratio.

A variation of the aspect above further comprises determining the first impedance comprises measuring a first voltage between two points along the fluidic channel of the cartridge containing the fluid at the first time point, and determining the second impedance comprises measuring a second voltage between two points on the calibration resistor at the first time point.

A variation of the aspect above further comprises determining a third impedance between the two points along the fluidic channel of the cartridge containing the fluid at a second time point, determining a second ratio based at least in part on the third impedance, and comparing the first impedance ratio and the second impedance ratio to determine the property of the fluid inside the cartridge.

A variation of the aspect above is, wherein measuring the first voltage between the two points along the fluidic comprises applying an input voltage between the two points along the fluidic channel of the cartridge containing the fluid.

A variation of the aspect above is, wherein measuring a second voltage comprises applying the same input voltage between the two points on the calibration resistor.

A variation of the aspect above is, wherein determining the property of the fluid comprises determining that the fluid is expired if a percentage difference between the first impedance ratio and the second impedance ratio is greater than a predetermined percentage.

A variation of the aspect above further comprises outputting a notification indicating the determine property of the fluid.

Another aspect of this disclosure includes an electronic reader for detecting a property of a fluid inside a cartridge. The electronic reader includes traces configured to connect to at least two electrodes disposed along a fluidic channel of the cartridge, a calibration resistor, and impedance processing circuitry. The impedance processing circuitry is configured to determine a first impedance of the fluid between the at least two electrodes of the cartridge at a first time point, determine a second impedance between two points on the calibration resistor at the first time point, determine a first impedance ratio based at least in part on the first impedance and the second impedance, determine a third impedance of the fluid between the at least two electrodes of the cartridge at a second time point, and determine a second impedance ratio based at least in part on the third impedance. The property of the fluid based at least in part on the first impedance ratio and the second impedance ratio.

A variation of the aspect above is, wherein the impedance processing circuitry is configured to determine the first impedance based at least in part on a first voltage measured between two points on the calibration resistor at the first time point, determine the second impedance based at least in part on a second voltage measured between two points on the calibration resistor at the first time point, and determine the third impedance based at least in part on a third voltage measured between two points on the calibration resistor at the first time point at the second time point.

A variation of the aspect above is, wherein the electronic reader is configured to apply an input voltage between the at least two electrodes of the cartridge and measures an output voltage between the two electrodes when the fluid is between the two electrodes in the fluidic channel.

A variation of the aspect above is, wherein the impedance processing circuitry is configured to compare the first impedance ratio with a second impedance ratio to determine the property of the fluid.

A variation of the aspect above is, wherein the impedance processing circuitry is configured to determine that the fluid is expired for its intended purpose if a percentage difference between the first impedance ratio and the second impedance ratio is greater than a predetermined percentage.

A variation of the aspect above is, wherein the impedance processing circuitry is configured to output a notification to indicate the determined property of the fluid.

BRIEF DESCRIPTION OF THE DRAWINGS

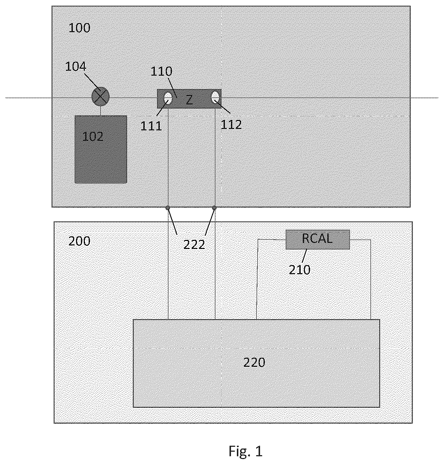

The present disclosure is described with reference to the accompanying drawings, in which like reference characters reference like elements, and wherein: FIG. 1 is an internal view of an electronic reader connected to a cartridge according to an exemplary embodiment of the present disclosure.

DETAILED DESCRIPTION

Generally described, one or more aspects of the present disclosure relate to devices and methods for inline detection of one or more properties of a fluid inside a cartridge. One or more properties of a solution stored inside a cartridge may change over time. However, it may be hard to access and test the solutions without releasing it from the cartridge. In certain embodiments, this disclosure relates to devices and methods for detecting a property of a calibration solution inside a cartridge used to calibrate sensors of the cartridge. In certain embodiments, devices and methods disclosed herein relates to detecting properties of one or more solutions inside a cartridge. Many cartridges that are used to take measurements in a medical setting include calibration solutions inside the cartridges to calibrate sensors in the cartridges. For example, a cartridge can include sensors configured to measure a property of a sample fluid. To ensure that the sensors remain accurate, a calibration fluid can be stored in the cartridge to calibrate the sensors between uses by providing a consistent data point for comparison. The calibration fluid may be provided to the sensors during a calibration mode, and the sensors can measure the property of the calibration fluid and set as its baseline. However, over time, one or more qualities of the calibration solutions may change due to, e.g., exposure to light or leaching from outside, and impact the accuracy of measurements of the cartridge.

Various methods of detecting a property of a solution inside a cartridge disclosed herein can include comparing metrics of the solution against metrics taken from a material that does not change substantially over time. In certain embodiments, the method can include comparing measured impedance of the solution against measured impedance of a resistor. In some embodiments, the method can also include testing and comparing metrics determined at different times to determine changes in the property of the solution inside the cartridge.

Other aspects of this disclosure include detecting a property of a solution inside a cartridge inline using an electronic reader to determine impedance of the solution and determine the property of the solution. Fig. 1 shows an embodiment of an electronic reader 200 disclosed herein, electrically connected to a cartridge 100, for example, through traces or terminals of the reader 200. In accordance with various embodiments, the cartridge 100 can include a fluidic channel 110, the fluidic channel 110 having at least two electrodes 111 and 112 disposed along the fluidic channel 110. A medium between the two electrodes 111 and 112 may have an impedance Z.

In some embodiments, the cartridge 100 can also include a calibration fluid reservoir 102 containing a calibration fluid. In some embodiments, the calibration fluid in the calibration fluid reservoir 102 can be provided to the fluidic channel 110 to, for example, flush a sample fluid out of the channel 110. In some embodiments, the calibration fluid reservoir 102 can include a valve 104 configured to control a flow of the calibration fluid. For example, a sample fluid (e.g., blood) can be provided to the fluidic channel 110 over the electrodes 111 and 112 and measured across the electrodes 111 and 112. After the sample fluid is tested, the calibration fluid can be conveyed along the fluidic channel 110, when the valve 104 is opened, to flush the fluidic channel 110 for subsequent measurements. In some embodiments, the calibration fluid can also be conveyed to the fluidic channel 110 before or after a measurement of the sample fluid to calibrate the electrodes 111 and 112 as described above.

In various embodiments, the electronic reader 200 can include impedance processing circuitry 220 and a calibration resistor 210 having a known resistance, $R_{cal}$. In some embodiments, the impedance processing circuitry 220 can be configured to electrically connect to the calibration resistor 210, for example, through traces. In some embodiments, the impedance processing circuitry 220 can electrically connect to two ends of the resistor 210 to form a closed circuit. In some embodiments, the impedance processing circuitry 220 can also be configured to electrically connect to an external device, for example, the cartridge 100. In some embodiments, the impedance processing circuitry 220 can be removably connected to the cartridge 100, mechanically and/or electrically, at removable connection points 222. As shown in Fig. 1, the impedance processing circuitry 220 can electrically connect to the two electrodes 111 and 112 of the cartridge 100 to form a closed circuit through a fluid to be tested between the two electrodes 111 and 112.

In various embodiments, the impedance processing circuitry 220 can be configured to determine an impedance between two terminals electrically connected to the impedance processing circuitry 220. In some embodiments, the impedance processing circuitry 220 can be configured to determine an impedance by measuring a voltage between two points electrically connected to the impedance processing circuitry 220. For example, the impedance processing circuitry 220 can be configured to determine an impedance between the fluid between the two electrodes 111 and 112 of the cartridge 100 by measuring a voltage between the two electrodes 111 and 112, or an impedance of the calibration resistor 210 by measuring a voltage between two points on the calibration resistor 210. In some embodiments, the impedance processing circuitry 220 can be configured to measure an output voltage between two points by applying an input voltage across the two terminals to create a current. Various methods can be used to determine impedance, for example, in-phase/quadrature (I/Q) demodulation techniques. The following method is provided as an example.

In some embodiments, the impedance processing circuitry 220 can be configured to electrically connect to the electrodes 111 and 112 to form a closed circuit, and apply a voltage $V_{in}$ to the fluid between the two electrodes 111 and 112. Similarly, the impedance processing circuitry 220 can be configured to electrically connect to the calibration resistor 210 and apply the same voltage $V_{in}$ or any other desirable voltage to the calibration resistor 210. In some embodiments, the impedance processing circuitry 220 can be configured to apply the $V_{in}$ or produce any desirable voltage by producing a programmable digital-to-analog voltage. In some embodiments, the impedance processing circuitry 220 can apply the same voltage $V_{in}$ to the fluid between the two electrodes 111 and 112, and to the calibration resistor 210.

In various embodiments, the impedance processing circuitry 220 can be configured to also measure an output voltage between two points where an input voltage has been applied by the impedance processing circuitry 220. In some embodiments, the input voltage can be an alternating current voltage. In some embodiments, the impedance processing circuitry 220 can be configured to then determine an impedance based on at least the output voltage measured between the two points where a voltage has been applied. In some embodiments, the impedance processing circuitry 220 can include an analog-to-digital converter ("ADC") configured to measure the measured voltage and convert to a digital signal for processing. For example, the impedance processing circuitry 220 may be configured to measure a voltage, $V_{Zunk}$, of the fluid between the two electrodes 111 and 112, and a voltage, $V_{RCAL}$ of the calibration resistor 210. In some embodiments, the impedance processing circuitry 220 can also include a Digital Fourier Transform ("DFT") engine to convert the ADC reading into a form with a magnitude and a phase.

In some embodiments, when the same voltage $V_{in}$ is applied to the fluid between the two electrodes 111 and 112 and to the calibration resistor 210, an unknown impedance of the fluid in cartridge 100 $Z_{UNK}$ can be calculated using the equation: $Z_{UNK} =$

$$R_{CAL} \times \frac{V_{RCAL}}{V_{Zunk}}.$$

Advantageously, the impedance processing circuitry 220 can be configured to calculate an impedance ratio based at least in part on a measured voltage of the fluid between the two electrodes 111 and 112. In some embodiments, the impedance ratio can be a ratio between the $Z_{UNK}$ of the fluid between the two electrodes 111 and 112, and an impedance $Z_{RCAL}$ between two points of the calibration resistor 210, governed by the equation:

$$impedance\ ratio = \frac{Z_{RCAL}\ (magnitue/phase)}{Z_{UNK}(magnitue/phase)}.$$

In other embodiments, an impedance ratio can also be determined without converting the measured voltages into impedance values, and instead, be determined directly from a measured voltage of the fluid between the two electrodes 111 and 112 and a measured voltage between two points of the calibration resistor 210.

Other aspects of this disclosure include using the electronic reader 200 to determine an impedance ratio as described above at two to more different time points to determine one or more properties of the fluid between the two electrodes 111 and 112 of the cartridge 100. In some embodiments, the one or more properties of the fluid to be determined can include a percentage of change in concentration of a certain substance in the fluid. In some embodiments, the one or more properties of the fluid to be determined can include a degree of change in a certain quality or quantity of the fluid. In some embodiments, the one or more properties of the fluid to be determined can include whether the fluid is still efficacious for its intended purpose, for example, calibrating a sensor as a calibration fluid. In some embodiments, the one or more properties of the fluid to be determined can be used to monitor how much the fluid properties of the calibration fluid have changed over time to ensure that the calibration fluid is still suitable for use, e.g., the calibration fluid has not outlived its shelf life or expired.

In certain embodiments, for example, a shift from a first impedance ratio $N_0$ at a first time point $t_0$ to a second impedance ratio Ni at a second time point $t_1$ may represents a change in the concentration of a substance in the calibration fluid. In some embodiments, a percentage of change, e.g., in the range of 0.5% to 20%, in the range of 1% to 10%, or in the range of 0.2% to 30%, can be predetermined for a certain type of calibration fluid and recorded in a memory of the impedance processing circuitry 220 of the electronic reader 200. If the impedance processing circuitry 220 determines a shift in impedance ratio, $\frac{N_1}{N_0}$, to be greater than the predetermined percentage of change, the impedance processing circuitry 220 may determine that the fluid in the cartridge 100 is no longer efficient as a calibration fluid.

In some embodiments, based at least in part on the impedance ratio, the impedance processing circuitry 220 may cause an indicator to be displayed on the electronic reader 200, indicating whether the fluid in the cartridge 100 is still suitable for use as a calibration fluid. In some embodiments, based at least in part on the impedance ratio, the impedance processing circuitry 220 may cause the electronic reader 200 to display a degree of change in a certain quality or quantity of the fluid. In some embodiments, based at least in part on the impedance ratio, the impedance processing circuitry 220 may cause the electronic reader 200 to display a percentage of change in concentration of a certain substance in the fluid. In other embodiments, based at least in part on the impedance ratio, the impedance processing circuitry 220 may send a notification or alarm to an external device through wires or wireless communication, indicating the property of the fluid in the cartridge 100 determined as described above.

In some embodiments, the first time point $t_0$ for testing the fluid in the cartridge 100 with the electronic reader 200 may be when the fluid in the cartridge 100 is known to be valid, for example, shortly after manufacturing the cartridge 100, before the cartridge 100 is placed into a storage, or right after the cartridge 100 is pulled out of the storage. In some embodiments, the second time point $t_1$ for testing the fluid in the cartridge 100 with the electronic reader 200 may be a predetermined period of time after the first time point $t_0$ to confirm periodically whether the cartridge 100 can still be accurately calibrated. In some embodiments, the second time point $t_1$ can be when the cartridge 100 is to be used by a user of the cartridge 100 to check whether the cartridge 100 may have been accurately calibrated for use.

In some embodiments, the impedance of the electronic reader $Z_{RCAL}$ may be a predetermined value or a series of predetermine values corresponding to a series of voltages stored inside the impedance processing circuitry 220 of the durable reader 200 such that the impedance processing circuitry 220 can determine an impedance ratio without calculating the impedance of the electronic reader $Z_{RCAL}$. In some embodiments, the impedance of the electronic reader $Z_{RCAL}$ may be tested and recorded in the memory of the impedance processing circuitry 220 such that the impedance processing circuitry 220 can determine an impedance ratio using the recorded impedance of the electronic reader $Z_{RCAL}$ without re-determining a new impedance of the electronic reader $Z_{RCAL}$.

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, a person of ordinary skill in the art will recognize that changes may be made in form and detail without departing from the scope of the present disclosure. Thus, the present disclosure is limited only by the claims.

In the foregoing specification, the disclosure has been described with reference to specific embodiments. However, as one skilled in the art will appreciate, various embodiments disclosed herein can be modified or otherwise implemented in various other ways without departing from the spirit and scope of the disclosure. Accordingly, this description is to be considered as illustrative and is for the purpose of teaching those skilled in the art the manner of making and using various embodiments of the disclosed methods and devices for detecting a property of a fluid in a cartridge. It is to be understood that the forms of disclosure herein shown and described are to be taken as representative embodiments. Equivalent elements, materials, processes or steps may be substituted for those representatively illustrated and described herein. Moreover, certain features of the disclosure may be utilized independently of the use of other features, all as would be apparent to one skilled in the art after having the benefit of this description of the disclosure. Expressions such as "including," "comprising," "incorporating," "consisting of," "have," "is" used to describe and claim the present disclosure are intended to be construed in a non-exclusive manner, namely allowing for items, components or elements not explicitly described also to be present. Reference to the singular is also to be construed to relate to the plural.

Further, various embodiments disclosed herein are to be taken in the illustrative and explanatory sense, and should in no way be construed as limiting of the present disclosure. Additionally, all numerical terms, such as, but not limited to, "first," "second," "third," "primary," "secondary," "main" or any other ordinary and/or numerical terms, should also be taken only as identifiers, to assist the reader's understanding of the various elements, embodiments, variations and/or modifications of the present disclosure, and may not create any limitations, particularly as to the order, or preference, of any element, embodiment, variation and/or modification relative to, or over, another element, embodiment, variation and/or modification.

It will also be appreciated that one or more of the elements depicted in the drawings/figures can also be implemented in a more separated or integrated manner, or even removed or rendered as inoperable in certain cases, as is useful in accordance with a particular application.

Numbered aspects

By way of non-limiting example, some aspects of the disclosure are set out in the following numbered clauses.

Numbered Clause 1. A system for detecting a property of a fluid, the system comprising:

a cartridge comprising a fluidic channel, the fluidic channel comprising at least two electrodes disposed along the fluidic channel of the cartridge;
an electronic reader configured to electrically connect to the cartridge, the electronic reader comprising:

a calibration resistor, and
impedance processing circuitry, the impedance processing circuitry configured to:

determine a first impedance of the fluid in the fluidic channel of the cartridge,
determine a second impedance of the calibration resistor in the electronic reader,
determine at least a first impedance ratio based at least in part on the first impedance and the second impedance, and
determine the property of the fluid based at least in part on the first impedance ratio.

Numbered Clause 2. The system of Numbered Clause 1, wherein the electronic reader is configured to:

determine the first impedance based at least in part on a first voltage of the fluid measured between the at least two electrodes of the cartridge, and
determine the second impedance based at least in part on a second voltage measured between two points on the calibration resistor.

Numbered Clause 3. The system of Numbered Clause 1 or 2, wherein the electronic reader is configured to apply an input voltage between the at least two electrodes of the cartridge and measures the first voltage between the two electrodes when the fluid is between the two electrodes in the fluidic channel.

Numbered Clause 4. The system of any preceding Numbered Clause, wherein the impedance processing circuitry is configured to compare the first impedance ratio with a second impedance ratio to determine the property of the fluid, the first impedance ratio determined at least in part based on measurements taken at a first time point, and the second impedance ratio determined at least in part based on measurements taken at a second time point.

Numbered Clause 5. The system of Numbered Clause 4, wherein the electronic reader further comprises a memory for storing at least the first impedance ratio and the second impedance, and wherein the electronic reader is configured to determine the second impedance ratio based at least in part on the stored second impedance.

Numbered Clause 6. The system of Numbered Clause 4 or 5, wherein the impedance processing circuitry is configured to determine that the fluid is expired if a percentage difference between the first impedance ratio and the second impedance ratio is greater than a predetermined percentage.

Numbered Clause 7. The system of any preceding Numbered Clause, wherein the impedance processing circuitry is configured to output a notification to indicate the determined property of the fluid.

Numbered Clause 8. A method of detecting a property of a fluid inside a cartridge using an electronic reader, the method comprising:

electrically connecting the electronic reader to the cartridge,
determining a first impedance of a fluid in a fluidic channel of the cartridge at a first time point,
determining a second impedance of a calibration resistor in the electronic reader at the first time point,
determining at least a first impedance ratio based at least in part on the first impedance and the second impedance, and
determining the property of the fluid at least in part based on the first impedance ratio.

Numbered Clause 9. The method of Numbered Clause 8, further comprising:

determining the first impedance comprises measuring a first voltage between two points along the fluidic channel of the cartridge containing the fluid at the first time point, and
determining the second impedance comprises measuring a second voltage between two points on the calibration resistor at the first time point.

Numbered Clause 10. The method of Numbered Clause 8 or 9, further comprising:

determining a third impedance between the two points along the fluidic channel of the cartridge containing the fluid at a second time point,
determining a second ratio based at least in part on the third impedance, and
comparing the first impedance ratio and the second impedance ratio to determine the property of the fluid inside the cartridge.

Numbered Clause 11. The method of Numbered Clause 9 or 10, wherein measuring the first voltage between the two points along the fluidic comprises applying an input voltage between the two points along the fluidic channel of the cartridge containing the fluid.

Numbered Clause 12. The method of Numbered Clause 11, wherein measuring a second voltage comprises applying the same input voltage between the two points on the calibration resistor.

Numbered Clause 13. The method of any of Numbered Clauses 8 to 12, wherein determining the property of the fluid comprises determining that the fluid is expired if a percentage difference between the first impedance ratio and the second impedance ratio is greater than a predetermined percentage.

Numbered Clause 14. The method of any of Numbered Clauses 8 to 13, further comprising outputting a notification indicating the determine property of the fluid.

Numbered Clause 15. An electronic reader for detecting a property of a fluid inside a cartridge, the electronic reader comprising:

traces configured to connect to at least two electrodes disposed along a fluidic channel of the cartridge;
a calibration resistor, and
impedance processing circuitry, the impedance processing circuitry configured to:

determine a first impedance of the fluid between the at least two electrodes of the cartridge at a first time point,
determine a second impedance between two points on the calibration resistor at the first time point,
determine a first impedance ratio based at least in part on the first impedance and the second impedance,
determine a third impedance of the fluid between the at least two electrodes of the cartridge at a second time point,
determine a second impedance ratio based at least in part on the third impedance,
wherein the property of the fluid is based at least in part on the first impedance ratio and the second impedance ratio.

Numbered Clause 16. The electronic reader of Numbered Clause 15, wherein the impedance processing circuitry is configured to determine the first impedance based at least in part on a first voltage measured between two points on the calibration resistor at the first time point, determine the second impedance based at least in part on a second voltage measured between two points on the calibration resistor at the first time point, and determine the third impedance based at least in part on a third voltage measured between two points on the calibration resistor at the first time point at the second time point.

Numbered Clause 17. The electronic reader of Numbered Clause 15 or 16, wherein the electronic reader is configured to apply an input voltage between the at least two electrodes of the cartridge and measures an output voltage between the two electrodes when the fluid is between the two electrodes in the fluidic channel.

Numbered Clause 18. The electronic reader of any of Numbered Clauses 15 to 17, wherein the impedance processing circuitry is configured to compare the first impedance ratio with a second impedance ratio to determine the property of the fluid.

Numbered Clause 19. The electronic reader of Numbered Clause 18, wherein the impedance processing circuitry is configured to determine that the fluid is expired for its intended purpose if a percentage difference between the first impedance ratio and the second impedance ratio is greater than a predetermined percentage.

Numbered Clause 20. The electronic reader of Numbered Clause 18 or 19, wherein the impedance processing circuitry is configured to output a notification to indicate the determined property of the fluid.

**Claims**

1. A system for detecting a property of a fluid, the system comprising:

   a cartridge comprising a fluidic channel, the fluidic channel comprising at least two electrodes disposed along the fluidic channel of the cartridge;
   an electronic reader configured to electrically connect to the cartridge, the electronic reader comprising:

      a calibration resistor, and
      impedance processing circuitry, the impedance processing circuitry configured to:

         determine a first impedance of the fluid in the fluidic channel of the cartridge,
         determine a second impedance of the calibration resistor in the electronic reader,
         determine at least a first impedance ratio based at least in part on the first impedance and the second impedance, and
         determine the property of the fluid based at least in part on the first impedance ratio.

2. The system of Claim 1, wherein the electronic reader is configured to:

   determine the first impedance based at least in part on a first voltage of the fluid measured between the at least two electrodes of the cartridge, and
   determine the second impedance based at least in part on a second voltage measured between two points on the calibration resistor.

3. The system of Claim 1 or 2, wherein the electronic reader is configured to apply an input voltage between the at least two electrodes of the cartridge and measures the first voltage between the two electrodes when the fluid is between the two electrodes in the fluidic channel.

4. The system of any preceding Claim, wherein the impedance processing circuitry is configured to compare the first impedance ratio with a second impedance ratio to determine the property of the fluid, the first impedance ratio determined at least in part based on measurements taken at a first time point, and the second impedance ratio determined at least in part based on measurements taken at a second time point, preferably wherein the electronic reader further comprises a memory for storing at least the first impedance ratio and the second impedance, and wherein the electronic reader is configured to determine the second impedance ratio based at least in part on the stored second impedance.

5. The system of Claim 4, wherein the impedance processing circuitry is configured to determine that the fluid is expired if a percentage difference between the first impedance ratio and the second impedance ratio is greater than a predetermined percentage and/or wherein the impedance processing circuitry is configured to output a notification to indicate the determined property of the fluid.

6. A method of detecting a property of a fluid inside a cartridge using an electronic reader, the method comprising:

   electrically connecting the electronic reader to the cartridge,
   determining a first impedance of a fluid in a fluidic channel of the cartridge at a first time point,
   determining a second impedance of a calibration resistor in the electronic reader at the first time point,
   determining at least a first impedance ratio based at least in part on the first impedance and the second impedance, and
   determining the property of the fluid at least in part based on the first impedance ratio.

7. The method of Claim 6, further comprising:

   determining the first impedance comprises measuring a first voltage between two points along the fluidic channel of the cartridge containing the fluid at the first time point, and determining the second impedance comprises measuring a second voltage between two points on the calibration resistor at the first time point.

8. The method of Claim 6 or 7, further comprising:

determining a third impedance between the two points along the fluidic channel of the cartridge containing the fluid at a second time point, determining a second ratio based at least in part on the third impedance, and comparing the first impedance ratio and the second impedance ratio to determine the property of the fluid inside the cartridge.

9. The method of Claim 7 or 8, wherein measuring the first voltage between the two points along the fluidic comprises applying an input voltage between the two points along the fluidic channel of the cartridge containing the fluid, preferably wherein measuring a second voltage comprises applying the same input voltage between the two points on the calibration resistor.

10. The method of any of Claims 6 to 9, wherein determining the property of the fluid comprises determining that the fluid is expired if a percentage difference between the first impedance ratio and the second impedance ratio is greater than a predetermined percentage and/or wherein the method further comprises outputting a notification indicating the determine property of the fluid.

11. An electronic reader for detecting a property of a fluid inside a cartridge, the electronic reader comprising:

traces configured to connect to at least two electrodes disposed along a fluidic channel of the cartridge;
a calibration resistor, and
impedance processing circuitry, the impedance processing circuitry configured to:

determine a first impedance of the fluid between the at least two electrodes of the cartridge at a first time point,
determine a second impedance between two points on the calibration resistor at the first time point,
determine a first impedance ratio based at least in part on the first impedance and the second impedance,
determine a third impedance of the fluid between the at least two electrodes of the cartridge at a second time point,
determine a second impedance ratio based at least in part on the third impedance,

wherein the property of the fluid is based at least in part on the first impedance ratio and the second impedance ratio.

12. The electronic reader of Claim 11, wherein the impedance processing circuitry is configured to determine the first impedance based at least in part on a first voltage measured between two points on the calibration resistor at the first time point, determine the second impedance based at least in part on a second voltage measured between two points on the calibration resistor at the first time point, and determine the third impedance based at least in part on a third voltage measured between two points on the calibration resistor at the first time point at the second time point.

13. The electronic reader of Claim 11 or 12, wherein the electronic reader is configured to apply an input voltage between the at least two electrodes of the cartridge and measures an output voltage between the two electrodes when the fluid is between the two electrodes in the fluidic channel.

14. The electronic reader of any of Claims 11 to 13, wherein the impedance processing circuitry is configured to compare the first impedance ratio with a second impedance ratio to determine the property of the fluid.

15. The electronic reader of Claim 14, wherein the impedance processing circuitry is configured to determine that the fluid is expired for its intended purpose if a percentage difference between the first impedance ratio and the second impedance ratio is greater than a predetermined percentage and/or wherein the impedance processing circuitry is configured to output a notification to indicate the determined property of the fluid.

Fig. 1

Europäisches
Patentamt

European
Patent Office

Office européen
des brevets

# EUROPEAN SEARCH REPORT

**Application Number**

EP 24 18 8326

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 618 019 B2 (FLORIDA ATLANTIC UNIV BOARD OF TRUSTEES [US]) 4 April 2023 (2023-04-04) | 1-4,6-9, 11-14 | INV. G01N33/487 G01N15/1031 |
| A | * figures 2, 4A * | 5,10,15 | ADD. G01N27/02 G01N15/10 |

----- 

| | |
|---|---|
| | TECHNICAL FIELDS SEARCHED (IPC) |
| | G01N |

The present search report has been drawn up for all claims

| Place of search | Date of completion of the search | Examiner |
|---|---|---|
| The Hague | 3 December 2024 | Mauritz, Jakob |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 24 18 8326

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2024

| Patent document cited in search report | Publication date | Patent family member(s) | Publication date |
|---|---|---|---|
| US 11618019 B2 | 04-04-2023 | US 2020171494 A1 | 04-06-2020 |
| | | US 2023211339 A1 | 06-07-2023 |
| | | US 2023211340 A1 | 06-07-2023 |

EPO FORM P0459

For more details about this annex : see Official Journal of the European Patent Office, No. 12/82

**EP 4 492 057 A1**